# EUROPÄISCHE PATENTSCHRIFT

(11) **EP 0 412 276 B1**
(45) Veröffentlichungstag und Bekanntmachung des Hinweises auf die Patenterteilung: **16.03.1994**
(21) Anmeldenummer: 90112176.4
(22) Anmeldetag: 27.06.1990
(51) Int. Cl.: B62D 1/19, B60K 37/00

(54) **Sicherheitsverbindung zwischen Lenksäule und Instrumententräger**
Safety mounting of steering column and dashboard
Fixation de sécurité reliant colonne de direction et tableau de bord

(30) Priorität: 03.08.1989 DE 3925705
(43) Veröffentlichungstag der Anmeldung: 13.02.1991
(73) Patentinhaber: Dr.Ing.h.c. F. Porsche Aktiengesellschaft, 70435 Stuttgart (DE)
(72) Erfinder: Wierschem, Franz-Rudolf, Dipl.-Ing., D-7251 Weissach (DE)

(56) Entgegenhaltungen:
- DE-A- 2 313 115
- DE-A- 3 433 936
- DE-B- 1 911 054
- FR-A- 2 210 166
- PATENT ABSTRACTS OF JAPAN ,Bd 11, Nr 98 (M-575)(2545), 27 März 1987; & JP-A-61247567 (MAZDA) 04.11.1986

## Beschreibung

Die Erfindung bezieht sich auf ein Kraftfahrzeug nach dem Oberbegriff des Anspruchs 1.

Zur Erzielung einer Lenkanlage mit einem optimalen Deformationsverhalten bei einem Crash ist neben einem entsprechenden Deformationselement und einer teleskopierbaren Lenkungswelle auch erforderlich, daß die Anbauteile, wie z.B. der mit dem Armaturenbrett verbundene Instrumententräger bzw. Instrumentenhutze ein Verschieben der Lenksäule nicht hindernd im Wege steht.

Aus der JP-A-61247567 ist ein Fahrzeug mit einer eine Lenkanlage teilweise umgreifenden Instrumentenhutze bekannt, die in ein Armaturenbrett integriert ist, das an seitlichen Anbauteilen des Fahrzeugs befestigt wird. Die Instrumentenhutze ist auf einem mit einem Lenkschutzrohr verbundenen Querträger über mehrere durch Krafteinwirkung selbsttätig lösbare Verbindungselemente gehalten.

Aufgabe der Erfindung ist es, eine Lenkanlage mit einem Instrumententräger zu schaffen, die bei einem Crash ein optimales Deformationsverhalten gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch eine getrennt vom Armaturenbrett gehaltene Instrumentenhutze, die Lenkanlage bei einem Crash unter Krafteinwirkung ohne eine wesentliche Behinderung teleskopierbar ist. Um sicherzustellen, daß die Instrumentenhutze beim Crash keine wesentliche Bewegung in Fahrtrichtung durchführt sondern sich in einfacher Weise von seinen Befestigungspunkten an der Lenkanlage trennen kann, sind durch Krafteinwirkung selbsttätig lösbare Verbindungselemente zwischen der Lenkanlage und der Hutze vorgesehen. Desweiteren soll die Instrumentenhutze bei einer Krafteinwirkung in- oder entgegen der Fahrtrichtung in ihrem Bewegungsablauf nach Lösung der Verbindungselemente nicht behindert werden. Hierzu dient eine Gleitkufe, bei der die Hutze zwangsgeführt ist und eine Richtungsänderung in der Bewegung erhält, so daß sie sich frei über alle Bauelemente der Lenkanlage hinweg bewegen kann und eine Bewegungsbehinderung jeder Art ausgeschlossen wird.

Ein Ausführungsbeispiel der Erfindung ist in der Zeichnung dargestellt und wird im folgenden näher beschrieben.

Es zeigen:
- Fig. 1: eine Seitenansicht der Lenkanlage mit Instrumentenhutze, Druckstange und Gleitkufe,
- Fig. 2: eine Draufsicht zu Fig. 1 mit einem am Lenkrohr befestigten Querträger zur Aufnahme der Instrumentenhutze,
- Fig. 3: einen Schnitt nach der Linie III-III gemäß Fig. 1 mit Ansicht auf die Gleitkufe,
- Fig. 4: eine Seitenansicht der Gleitkufe,
- Fig. 5: eine Ansicht auf die Gleitkufe in Pfeilrichtung R gesehen,
- Fig. 6: ein am Querträger anzuschraubendes Aufnahmeelement in einer Seitenansicht,
- Fig. 7: das Aufnahmeelement in Pfeilrichtung S der Fig. 6 gesehen,
- Fig. 8: einen Schnitt durch das Aufnahmeelement nach der Linie VIII-VIII der Fig. 6,
- Fig. 9: ein an den Querträger angegossenes Aufnahmeelement im Schnitt nach der Linie IX-IX der Fig. 2,
- Fig. 10: eine Vorderansicht eines Gleitstückes ,
- Fig. 11: eine Seitenansicht des Gleitstückes,
- Fig. 12: eine Draufsicht des Gleitstückes,
- Fig. 13: eine Ansicht auf eine Klammerfeder des Gleitstückes von der Unterseite her gesehen und
- Fig. 14: eine Seitenansicht der Klammerfeder.

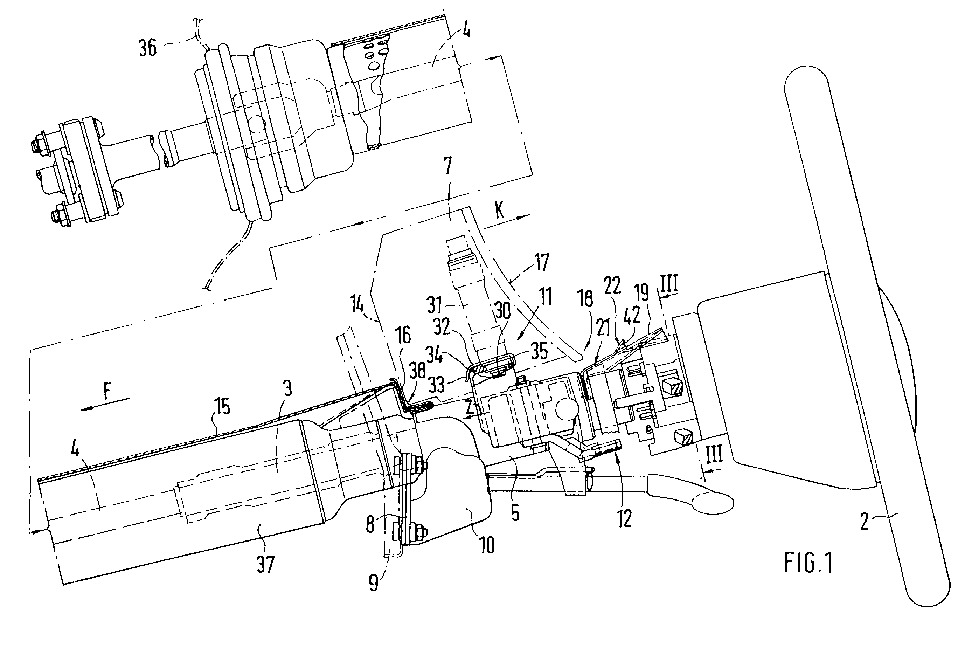

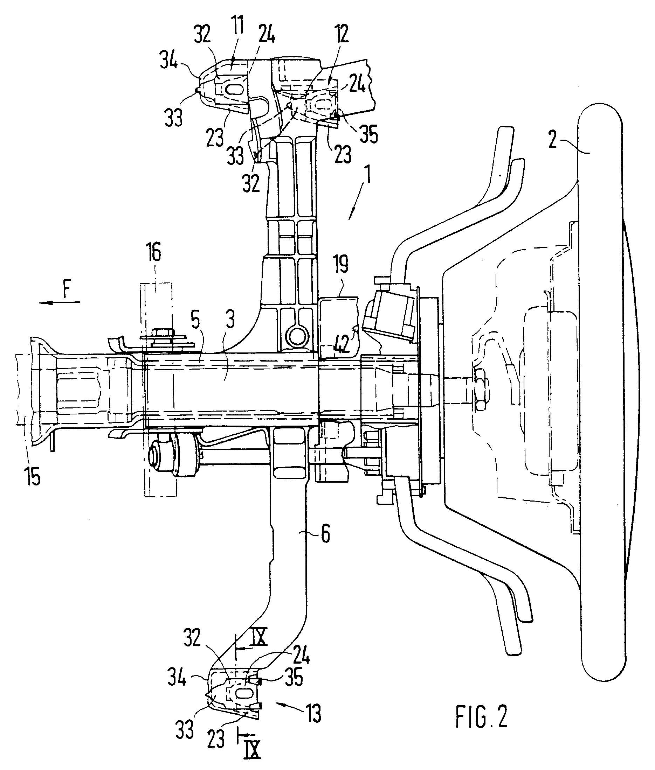

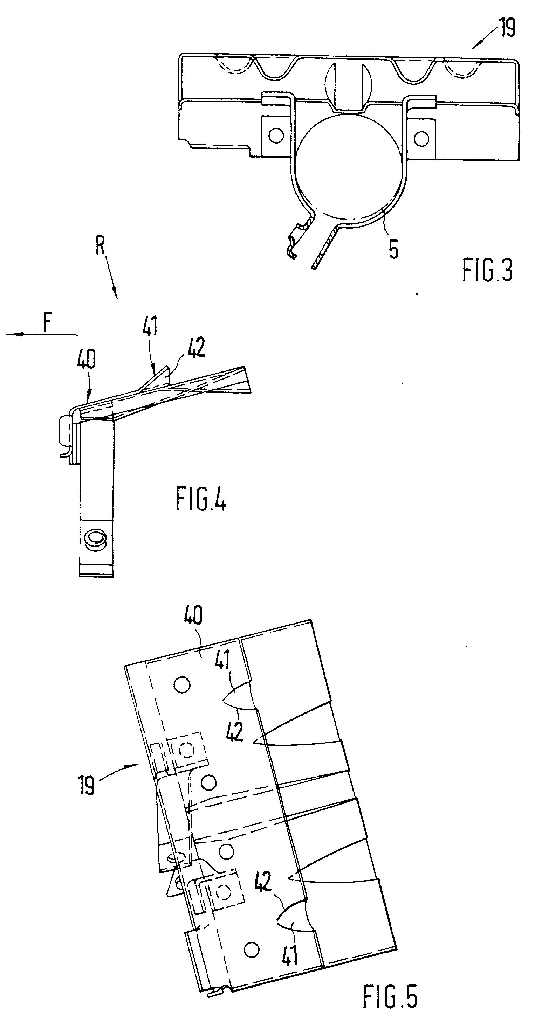

Wie die Fig. 1 und 2 näher zeigen, umfaßt eine Lenkanlage 1 eines Kraftfahrzeugs eine mit einem Lenkrad 2 verbundene teleskopierbare Lenkwelle 3, 4 die in einem Lenkschutzrohr 5 geführt ist. Mit diesem ist ein Querträger 6 verbunden, der eine Instrumentenhutze 7 trägt, die in ein quer im Fahrzeug angeordnetes und an den Seitenwänden des Fahrzeugaufbaus befestigtes Armaturenbrett getrennt von diesem gehalten, integriert ist. Die Lenkanlage 1 ist über Halterungen 8 an einer Querwand 9 des Fahrzeugaufbaus befestigt und in Hochrichtung über eine Einrichtung 10 verschwenkbar und in verschiedenen Stellungen festsetzbar.

Die Instrumentenhutze 7 ist am Querträger 6 über mehrere Verbindungselemente 11, 12, 13 gehalten, welche sich unter Krafteinwirkung z.B. bei einem Crash lösen können, so daß die Instrumentenhutze 7 sich von den Lagerstellen am Querträger 6 trennt und aus dem Armaturenbrett, was nicht näher dargestellt ist, entgegen der Fahrtrichtung heraustritt.

Wie insbesondere Fig. 1 zeigt, ist der Rückfläche 14 der Hutze 7 eine Druckstange 15 zugeordnet, welche mit einem Abstützblech 16 verbunden und korrespondierend mit der Hutze 7 gekoppelt ist. Die der Rückfläche 14 abgekehrte Frontfläche 17 der Hutze 7 ist mit ihrem unteren Kantenbereich 18 einer Gleitkufe 19 zugerichtet, so daß bei einer Bewegung in Pfeilrichtung 20 die Hutze 7 auf schrägen Abweisflächen 21 und 22 zwangsführbar ist.

Die Verbindungselemente 11, 12 und 13 sind an den freien Enden des Querträgers 6 angeordnet, wobei die Verbindungselemente 11, 12 separate anschraubbare Elemente sind und das dritte Verbindungselement 13 an den Träger 6 mit angegossen ist. Denkbar ist aber, daß die Verbindungselemente 11 und 12 auch an den Querträger angegossen sind bzw. das Verbindungselement 13 anschraubbar ist.

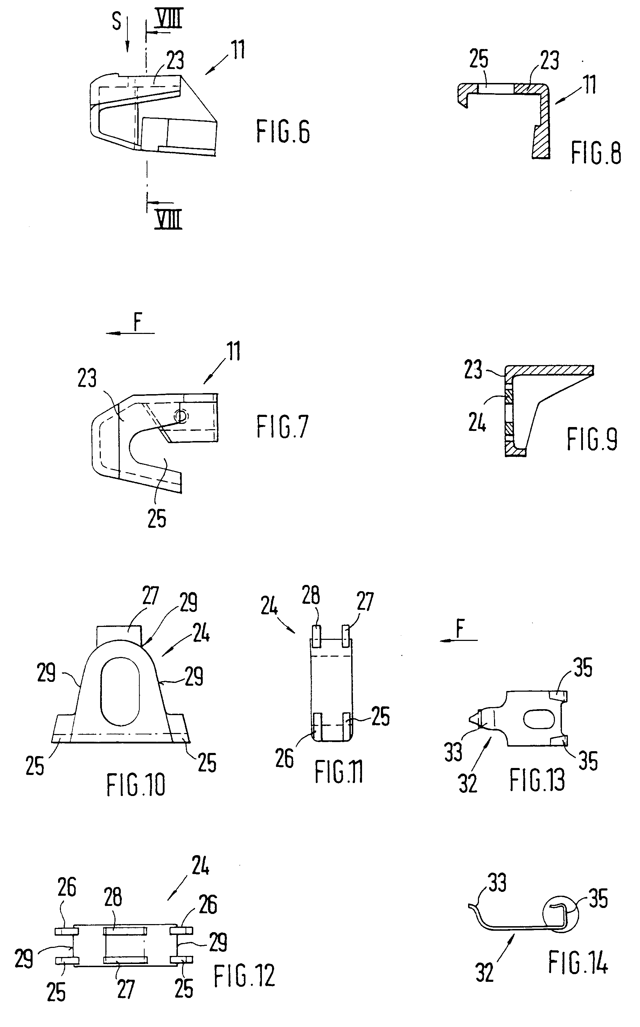

Jedes Verbindungselement 11, 12 und 13 umfaßt ein plattenförmiges Aufnahmeteil 23 für ein Gleitstück 24, das mit der Hutze 7 verbunden ist. Das Aufnahmeteil 23 ist an allen Elementen trotz einer anderen Gesamtausbildung gleich ausgeführt, so daß eine nähere Erklärung z.B. an dem Element 11 erfolgen kann, das in den Fig. 6, 7 und 8 näher dargestellt ist. Das Aufnahmeteil 23 weist eine schlitzförmige Öffnung 25 auf, die entgegen der Fahrtrichtung F geöffnet ist und von dieser Seite her kann das paßgenau ausgeführte Gleitstück 24 eingeschoben werden.

Insbesondere erweitert sich die schlitzförmige Öffnung 25 keilförmig zur Öffnungsseite hin, wobei das Gleitstück 24 entsprechend ausgeführt ist. Dies ist über Führungsnasen 26a, 26 und 27, 28, welche die Ränder der Öffnung 25 des Aufnahmeteils 23 von außen übergreifen, in diesem verschiebbar gehalten, was in den Fig. 10 bis 12 dargestellt ist.

Die Führungsnasen 26a und 26 sind jeweils vorragend von den beiden Seitenflächen 29 des Gleitstückes 24 mit einem Abstand vorgesehen, welches der Dicke der Platte 23 des Aufnahmeteils 11, 12 und 13 entspricht. Die weiteren Führungsnasen 27 und 28 sind im vorderen Bereich 29a des Gleitstückes 24 angeordnet.

Zur Verbindung der Instrumentenhutze 7 mit dem Querträger 6 über die Elemente 11, 12 und 13 wird jedes Gleitstück 24 über eine Schraube 30 mit einem Träger 31 in der Hutze 7 verbunden. Die in die Öffnungen 25 paßgenau eingeschobenen Gleitstücke 24 werden über eine vorgespannte Klammerfeder 32 (Fig. 13 und 14) am plattenförmigen Aufnahmeteil 23 der Verbindungselemente 11, 12 und 13 des Querträgers 6 gehalten.

Die Klammerfeder 32 umfaßt einen sich in Fahrtrichtung F erstreckenden vorderen Schenkel 33, der eine abgerundete Gleitkante 34 des Querträgers 6 bzw. des Aufnahmeteils 23 der Elemente 11, 12 und 13 übergreift. Über Bügel 35 wird das Gleitstück 24 umgriffen, so daß dieses festgeklemmt über die Feder 32 in die Öffnung 25 des plattenförmigen Aufnahmeelements 23 angeordnet ist.

Mit dem Lenkschutzrohr 5 ist die Druckstange 15 über das Abstützblech 16 verbunden und mit dem diesen Abstützblech abgekehrten Ende der Druckstange 15 ist sie an einer vorderen Fahrzeugaufbauwand 36 abgestützt. Die Druckstange 15 besteht im wesentlichen aus einem steifen Blechstreifen, der oberhalb eines Deformationstopfes 37 verläuft und sich in etwa der runden Kontur anpaßt. Das Abstützblech 16 besteht vzw. aus einem quer angeordneten Winkelprofil, das mit seinen Schenkeln einen Teil des Eckbereiches 38 an der Rückfläche 14 der Hutze 7 einfaßt.

In Fahrtrichtung F gesehen ist vor der Instrumentenhutze 7 eine Gleitkufe 19 angeordnet, die eine entgegen der Fahrtrichtung F geneigte erste Abweisfläche 21 aufweist, an die sich eine zweite Abweisfläche 22 anschließt (Fig. 3 bis 5). Diese Abweisfläche 22 ist unter einem steileren Winkel angestellt als die erste Abweisfläche 21. Gebildet wird diese zweite Abweisfläche 22 z.B. durch vorstehende Ausprägungen 42 in der ersten Abweisfläche 21.

Im Grundzustand weist die Instrumentenhutze 7 eine Lage gemaß der dargestellten Art in Fig. 1 auf. Bei einem Crash wird der Fahrer gegen das Lenkrad 2 bzw. gegen einen Airbag gedrückt und gleichzeitig wird in die Lenkanlage in Fahrtrichtung F eine Kraft eingeleitet. Die Lenkwellen 3 und 4 schieben sich teleskopisch ineinander die Querwand 9 wird deformiert und der Deformationstopf 35 wird verformt. Während dieses Vorgangs wird über die Druckstange 15 und das Abstützblech 16 die Instrumentenhutze 7 in Pfeilrichtung K verschoben, wobei gleichzeitig durch die Verschiebung der Lenkanlage 1 und somit des Querträgers 6 in Pfeilrichtung Z die Verbindungselemente 11, 12 und 13 gelöst werden. Die Gleitstücke 24 wandern aus den Öffnungen 25 der Aufnahmeteile 23 entgegen der Fahrtrichtung F heraus, so daß die Instrumentenhutze 7 frei von ihren Befestigungspunkten ist und ein unbehindertes Verschieben der Lenkanlage ohne Blockbildung zur Aufnahme und Absorbtion der Energie erfolgt.

## Patentansprüche

1. Kraftfahrzeug mit einer eine Lenkanlage (1) teilweise umgreifenden Instrumentenhutze (7), die in ein Armaturenbrett integriert ist, das an seitlichen Aufbauteilen des Fahrzeugs befestigt wird, wobei die Instrumentenhutze (7) auf einem mit einem Lenkschutzrohr (5) verbundenem Querträger (6) über mehrere durch Krafteinwirkung selbsttätig lösbare Verbindungselemente (11, 12, 13) gehalten ist,**dadurch gekennzeichnet**, daß die Rückfläche (14) der Instrumentenhutze (7) einer am Fahrzeugaufbau (36) gehaltenen Druckstange (15) gegenübersteht, wobei ein dem Lenkschutzrohr (5) zugerichteter Kantenbereich (18) von einer Frontfläche (17) mit einer geneigten Abweisflache (21, 22) an einer Gleitkufe (19) am Lenkschutzrohr (5) zusammenwirkt.

2. Kraftfahrzeug nach Anspruch 1, dadurch gekennzeichnet, daß die Verbindungselemente (11, 12, 13) an den freien Enden des Querträgers (6) der Lenkanlage (1) plattenförmige Aufnahmeteile (23) mit schlitzförmigen Öffnungen (25) umfassen, die entgegen der Fahrtrichtung F geöffnet sind und in denen jeweils ein mit der Instrumentenhutze (7) verbundenes Gleitstück (24) geführt ist.

3. Kraftfahrzeug nach den Ansprüchen 1 oder 2, dadurch gekennzeichnet, daß die schlitzförmige Öffnung (25) im Aufnahmeteil (23) sich entgegen der Fahrtrichtung (F) keilförmig erweitert und das Gleitstück (24) paßgenau aufnimmt und Führungsnasen (26, 26a, 27 und 28) am Gleitstück (24) die Öffnungsränder des plattenförmigen Aufnahmeelements (23) beidseitig umgreifen.

4. Kraftfahrzeug nach Anspruch 3, dadurch gekennzeichnet, daß die Führungsnasen (26a, 26) des Gleitstücks (24) jeweils vorragend an den Längsseiten (29) sowie im vorderen Bereich (29a) angeordnet sind.

5. Kraftfahrzeug nach einem oder mehreren der vorhergehenden Ansprüche, dadurch gekennzeichnet, daß das Gleitstück (24) in der schlitzförmigen Öffnung (25) über eine vorgespannte Klammerfeder (32) am Aufnahmeteil (23) festgehalten ist, die mit einem sich in Fahrtrichtung (F) erstreckenden vorderen Schenkel (33) eine abgerundete Gleitkante (34) übergreift und mit weiteren zum vorderen Schenkel (33) abgekehrt angeordneten Bügeln (35) das Gleitstück (24) umfassen.

6. Kraftfahrzeug nach einem oder mehreren der vorhergehenden Ansprüche, dadurch gekennzeichnet, daß die Druckstange einen oberhalb eines Deformationstopfes (37) der Lenkanlage (1) angeordneten steifen Blechstreifen (15) umfaßt, der mit seinem einen Ende an einer vorderen Aufbauwand (36) des Fahrzeugs abgestützt ist und mit seinem dem Lenkrad (2) zugekehrten Ende ein Abstützblech (16) trägt, das dem unteren Kantenbereich (38) an der Rückfläche (14) der Instrumentenhutze (7) korrespondierend gegenübersteht.

7. Kraftfahrzeug nach einem oder mehreren der vorhergehenden Ansprüche, dadurch gekennzeichnet, daß die Gleitkufe (19) - in bezug auf die Fahrtrichtung (F) - vor der Instrumentenhutze (7) angeordnet ist und eine entgegen der Fahrtrichtung (F) geneigte erste Abweisfläche (21) aufweist, an die sich eine zweite Abweisfläche (22) anschließt, welche unter einem steileren Winkel als die erste Abweisfläche (21) der Gleitkufe (19) angestellt ist.

8. Kraftfahrzeug nach einem oder mehreren der vorhergehenden Ansprüche, dadurch gekennzeichnet, daß die zweite Abweisfläche (22) der Gleitkufe (19) aus vorstehenden Ausprägungen (42) in der ersten Abweisfläche (21) gebildet sind.

## Claims

1. A motor vehicle with an instrument shroud (7) engaging in part around a steering unit (1) and integrated in a dashboard secured to lateral parts of the body of the vehicle, wherein the instrument shroud (7) is held on a transverse support (6) - connected to a steering protection tube (5) - by way of a plurality of connexion members (11, 12, 13) automatically detachable by the action of force, **characterized in that** the rear face (14) of the instrument shroud (7) is opposite a thrust rod (15) held on the vehicle body (36), wherein an edge area (18) of a front end (17) facing the steering protection tube (5) cooperates with an inclined deflecting face (21, 22) on a sliding runner (19) on the steering protection tube (5).

2. A motor vehicle according to Claim 1, **characterized in that** the connexion members (11, 12, 13) at the free ends of the transverse support (6) of the steering unit (1) comprise plate-shaped receiving parts (23) with slot-shaped openings (25) which are opened contrary to the direction of travel F and in which a respective sliding member (24) connected to the instrument shroud (7) is guided.

3. A motor vehicle according to Claim 1 or 2, **characterized in that** the slot-shaped opening (25) in the receiving part (23) is enlarged in the shape of a wedge contrary to the direction of travel (F) and receives the sliding member (24) in an exactly fitting manner, and guide studs (26, 26a, 27 and 28) on the sliding member (24) engage around the opening edges of the plate-shaped receiving member (23) on both sides.

4. A motor vehicle according to Claim 3, **characterized in that** the guide studs (26a, 26) of the sliding member (24) are each arranged projecting at the longitudinal sides (29) and in the forward region (29a).

5. A motor vehicle according to one or more of the preceding Claims, **characterized in that** the sliding member (24) is secured in the slot-shaped opening (25) by way of a pre-stressed spring clip (32) on the receiving part (23), the spring clip (32) engaging over a rounded sliding edge (34) with a front arm (33) extending in the direction of travel (F) and engange[s] around the sliding member (24) with further brackets (35) arranged remote from the forward arm (33).

6. A motor vehicle according to one or more of the preceding Claims, **characterized in** **that** the thrust rod comprises a rigid sheet-metal strip (15) arranged above a deformation tube (37) of the steering unit (1) and supported at one end on a front wall (36) of body of the the vehicle and carrying with the end thereof facing the steering wheel (2) a support sheet (16) opposite the lower edge area (38) of the rear face (14) of the instrument shroud (7).

7. A motor vehicle according to one or more of the preceding Claims, **characterized in that** the sliding runner (19) is arranged in front of the instrument shroud (7) with respect to the direction of travel (F) and comprises a first deflecting face (21) which is inclined contrary to the direction of travel (F) and to which is attached a second deflecting face (22) set at a steeper angle than the first deflecting face (21) of the sliding runner (19).

8. A motor vehicle according to one or more of the preceding Claims, **characterized in that** the second deflecting face (22) of the sliding runner (19) [is] formed by projecting impressions (42) in the first deflecting face (21).

## Revendications

1. Véhicule automobile comportant une protection pour instruments (7), entourant partiellement un système de direction (1), qui est intégrée dans un tableau de bord fixé sur des parties latérales de la carrosserie du véhicule, la protection pour instruments (7) étant maintenue sur une traverse (6), reliée à un tube de protection de direction (5), par plusieurs éléments d'assemblage (11, 12, 13) automatiquement amovibles sous l'effet d'une force, caractérisé en ce que la face arrière (14) de la protection pour instruments (7) fait face à une barre de compression (15) maintenue sur la carrosserie (36), une zone de bordure (18), tournée vers le tube de protection de direction (5), d'une face frontale (17) coopérant avec une surface de déflexion (21, 22) inclinée sur un patin (19) du tube de protection de direction (5).

2. Véhicule automobile selon la revendication 1, caractérisé en ce que les éléments d'assemblage (11, 12, 13) comportent aux extrémités libres de la traverse (6) du système de direction (1), des pièces de logement (23) en forme de plaque avec des ouvertures (25) en fentes, qui sont ouvertes dans le sens contraire au sens de la marche (F) et dans chacune desquelles est guidé un coulisseau (24) relié à la protection pour instruments (7).

3. Véhicule automobile selon les revendications 1 ou 2, caractérisé en ce que l'ouverture (25) en fente s'élargit en coin dans la pièce de logement (23), dans le sens contraire au sens de la marche (F) et loge exactement le coulisseau (24) et en ce que des ergots de guidage (26, 26a, 27 et 28) du coulisseau (24) entourent des deux côtés les bords d'ouverture de la pièce de logement (23) en forme de plaque.

4. Véhicule automobile selon la revendication 3, caractérisé en ce que les ergots de guidage (26a, 26) du coulisseau (24) sont placés chacun de manière à dépasser des grands côtés (29) ainsi que dans la zone avant (29a).

5. Véhicule automobile selon une ou plusieurs des revendications précédentes, caractérisé en ce que le coulisseau (24) est fixé dans l'ouverture (25) en fente, sur la pièce de logement (23), par une agrafe formant ressort (32), précontrainte, qui avec une branche (33) avant s'étendant dans le sens de la marche (F), passe sur un bord de glissement (34) arrondi et avec d'autres étriers (35), tournés à l'opposé de la branche (33) avant, entoure le coulisseau (24).

6. Véhicule automobile selon une ou plusieurs des revendications précédentes, caractérisé en ce que la barre de compression entoure une bande en tôle (15) rigide, placée au-dessus d'un pot de déformation (37) du système de direction (1), bande qui avec l'une de ses extrémités prend appui contre une paroi de carrosserie (36) avant du véhicule et avec son extrémité tournée vers le volant (2), porte une tôle d'appui (16) qui fait face, en correspondance, à la zone de bordure (38) inférieure de la face arrière (14) de la protection des instruments (7).

7. Véhicule automobile selon une ou plusieurs des revendications précédentes, caractérisé en ce que le patin (19) est placé devant la protection des instruments (7)-par rapport au sens de la marche (F) - et présente une première surface de déflexion (21) inclinée dans le sens contraire au sens de la marche (F), à laquelle se raccorde une seconde surface de déflexion (22), qui est inclinée sous un angle plus raide que la première surface de déflexion (21) du patin (19).

8. Véhicule automobile selon une ou plusieurs des revendications précédentes, caractérisé en ce que la seconde surface de déflexion (22) du patin (19) est formée par des empreintes (42) saillantes pratiquées dans la première surface de déflexion (21).
